# EUROPEAN PATENT APPLICATION

(11) **EP 4 283 768 A2**
(43) Date of publication of application: **29.11.2023**
(21) Application number: 23175628.9
(22) Date of filing: 26.05.2023
(51) Int. Cl.: H01M 50/211, H01M 50/262

(54) **BATTERY MODULE, AND METHOD OF MANUFACTURING BATTERY MODULE**

(30) Priority: 26.05.2022 JP 2022085923
(71) Applicant: Envision AESC Japan Ltd., Zama-shi, Kanagawa 252-0012 (JP)
(72) Inventor: AMAGAI, Ryuichi, Zama, 252-0012 (JP); IZAWA, Takami, Zama, 252-0012 (JP); OKAZUMI, Ryoma, Zama, 252-0012 (JP); ARAKAWA, Satoru, Zama, 252-0012 (JP); MUHAMMAD, Fauzan, Zama, 252-0012 (JP)
(74) Representative: Dennemeyer & Associates S.A.

(57) **Abstract**

[Problem] To improve workability for manufacturing a battery module.

[Solution]A battery module 10 includes a plurality of battery cells 100 and a function material 200. The function material 200 is located between adjacent battery cells 100. The function material 200 includes an elastic particle 210 and a binder 220. The elastic particle 210 is dispersed in the binder 220.

## Description

### TECHNICAL FIELD

The present invention relates to a battery module, and a method of manufacturing a battery module.

### BACKGROUND ART

In recent years, various battery modules including a plurality of battery cells have been developed. In a battery module, a plurality of the battery cells are arrayed in a predetermined direction.

Patent Document 1 describes one example of a battery module. The battery module includes a spacer located between adjacent battery cells. The spacer is formed of a thermosetting resin.

Patent Document 2 describes one example of a battery module. The battery module includes a spacer located between adjacent battery cells. The spacer includes a packaging body and a plurality of granular bodies. The plurality of granular bodies are accommodated in the packaging body.

Patent Document 3 describes one example of a battery module. The battery module includes an elastic adhesive. The elastic adhesive is located between adjacent battery modules.

### RELATED DOCUMENT

### PATENT DOCUMENT

Patent Document 1: Japanese Patent Application Publication No. 2010-097693
Patent Document 2: Japanese Patent Application Publication No. 2014-072055
Patent Document 3: International Publication No. WO2018/163708

### SUMMARY OF INVENTION

### TECHNICAL PROBLEM

A compression pad such as a urethane sheet may be provided between adjacent battery cells. In use of the compression pad, however, a size of the compression pad needs to be changed according to a size of a battery cell. Specifically, a relatively large size of the battery cell results in also increase in the size of the compression pad. In this case, the handling of the compression pad may be difficult due to a predetermined factor such as static electricity. A use of the compression pad may also require peeling off a sheet such as polyethylene terephthalate (PET) film disposed on one surface of the compression pad. The compression pad provided between adjacent battery cells may accordingly decrease workability for manufacturing a battery module.

One example of an object of the present invention is to improve workability for manufacturing a battery module. Another object of the present invention will be clarified from description of the present specification.

### SOLUTION TO PROBLEM

One aspect of the present invention is as follows.
[1] A battery module including:
   a plurality of battery cells; and
   a function material located between the adjacent battery cells, wherein
   the function material includes an elastic particle, and a binder in which the elastic particle is dispersed.
[2] The battery cell according to [1], wherein
   a compression force deflection at 25 °C and 10 % deflection of the function material is equal to or more than 3.0 kPa and equal to or less than 10 kPa, and
   the compression force deflection at 70 °C and 70 % deflection of the function material is equal to or more than 0.40 MPa and equal to or less than 0.60 MPa.
[3] The battery module according to [1] or [2], wherein
   the elastic particle is a resinous hollow particle.
[4] The battery module according to any one of [1] to [3], wherein
   the binder is an acrylic resin.
[5] A method of manufacturing a battery module, including:
   a step of applying slurry onto a battery cell, the slurry including an elastic particle and a binder; and
   a step of curing the binder.
[6] The method of manufacturing a battery module according to [5], wherein,
   after the step of curing the binder, a compression force deflection at 25 °C and 10 % deflection of a function material including the elastic particle and the binder is equal to or more than 3.0 kPa and equal to or less than 10 kPa, and,
   after the step of curing the binder, the compression force deflection at 70 °C and 70 % deflection of the function material is equal to or more than 0.40 MPa and equal to or less than 0.60 MPa.
[7] The method of manufacturing a battery module according to [5] or [6], wherein
   the elastic particle is a resinous hollow particle.
[8] The method of manufacturing a battery module according to any one of [5] to [7], wherein
   the binder is an acrylic resin.
[9] The method of manufacturing a battery module according to any one of [5] to [8], wherein,
   in the step of curing the binder, the binder is cured by irradiating the binder with light.

### ADVANTAGEOUS EFFECTS OF INVENTION

According to the above-described aspect of the present invention, workability for manufacturing a battery module can be improved.

### BRIEF DESCRIPTION OF THE DRAWINGS

Fig. 1 is a perspective view of a battery module according to an embodiment.
Fig. 2 is an A-A' cross-sectional schematic diagram of Fig. 1.
Fig. 3 is a diagram illustrating a method of manufacturing a battery module according to the embodiment.
Fig. 4 is a diagram illustrating the method of manufacturing a battery module according to the embodiment.
Fig. 5 is a perspective view of a battery module according to a variant.

### EMBODIMENT

Hereinafter, an embodiment and a variant according to the present invention are described by using the accompanying drawings. In all drawings, a similar component is assigned with a similar reference sign, and description thereof is omitted, as appropriate.

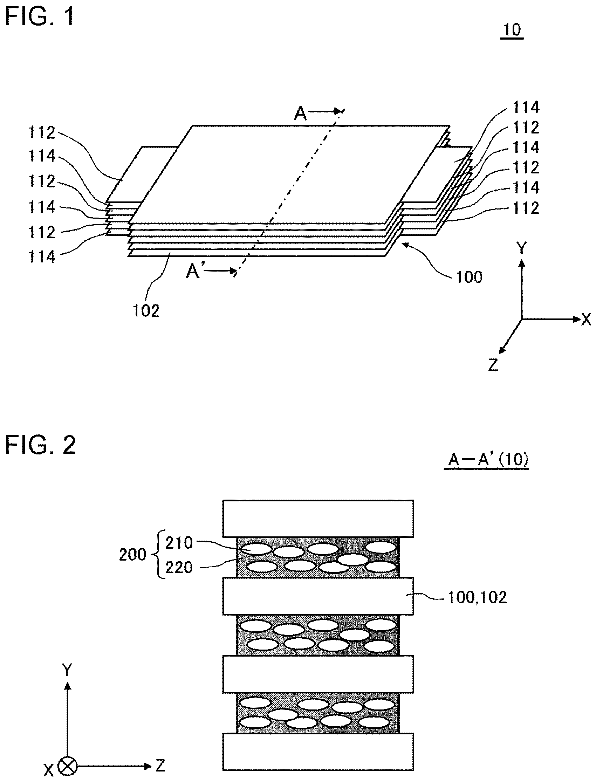

Fig. 1 is a perspective view of a battery module 10 according to an embodiment. Fig. 2 is an A-A' cross-sectional schematic diagram of Fig. 1.

In each figure, for description, an X direction, a Y direction, and a Z direction are illustrated. The X direction indicates a long direction of a battery cell 100 to be described later. The Y direction is orthogonal to the X direction. The Y direction indicates a thickness direction of the battery cell 100. The Z direction is orthogonal to both of the X direction and the Y direction. The Z direction indicates a short direction of the battery cell 100. Hereinafter, a direction perpendicular to the Y direction is referred to as an XZ-plane direction, as necessary.

As illustrated in Figs. 1 and 2, the battery module 10 includes a plurality of battery cells 100 and a plurality of function materials 200. The plurality of battery cells 100 and the plurality of function materials 200 are alternately arrayed in the Y direction. Thus, each function material 200 is located between adjacent battery cells 100 in the Y direction. For example, the battery module 10 is disposed with the Z direction being substantially parallel to a vertical direction and the X direction and the Y direction being substantially parallel to a horizontal direction perpendicular to the vertical direction. The battery module 10 is accommodated, for example, in an accommodation body which is not illustrated. The arrangement of the battery module 10 however is not limited to this example.

With reference to Fig. 1, a plurality of battery cells 100 are described. In Fig. 1, six battery cells 100 are schematically illustrated for description. The number of battery cells 100 included in the battery module 10 however is not limited to the example illustrated in Fig. 1.

Each battery cell 100 includes an exterior material 102, a positive electrode tab 112, and a negative electrode tab 114. The exterior material 102 seals a battery element which is not illustrated and electrolytic liquid which is not illustrated. The battery element includes a plurality of positive electrodes and a plurality of negative electrodes alternately stacked in the Y direction, and a separator located between a positive electrode and a negative electrode adjacent in the Y direction. The positive electrode tab 112 and the negative electrode tab 114 are drawn from opposite sides of the exterior material 102 in the X direction. The positive electrode tab 112 is electrically connected to the above-described plurality of positive electrodes. The negative electrode tab 114 is electrically connected to the above-described plurality of negative electrodes. The structure of the battery cell 100 however is not limited to the above-described example.

In the embodiment, a plurality of battery cells 100 arrayed in the Y direction are connected in series in order from a battery cell 100 on one side of the Y direction to a battery cell 100 on the other side of the Y direction. Specifically, the positive electrode tab 112 and the negative electrode tab 114 drawn from one of two battery cells 100 adjacent in the Y direction, and the positive electrode tab 112 and the negative electrode tab 114 drawn from the other one of two battery cells 100 adjacent in the Y direction are directed oppositely to each other in the X direction. On one side of the X direction of two battery cells 100 adjacent to each other in the Y direction, the positive electrode tab 112 drawn from one battery cell 100 and the negative electrode tab 114 drawn from the other battery cell 100 are joined to each other, for example, by laser welding. For example, the positive electrode tab 112 drawn from the uppermost battery cell 100 in Fig 1 to the left side in Fig. 1, and the negative electrode tab 114 drawn from the second battery cell 100 from top in Fig 1 to the left side in Fig. 1 are joined to each other. The positive electrode tab 112 drawn from the second battery cell 100 from top in Fig 1 to the right side in Fig. 1, and the negative electrode tab 114 drawn from the third battery cell 100 from top in Fig. 1 to the right side in Fig. 1 are joined to each other. Thus, a joint portion between the positive electrode tab 112 and the negative electrode tab 114 on the left side in Fig. 1 and a joint portion between the positive electrode tab 112 and the negative electrode tab 114 on the right side in Fig. 1 are alternately disposed in a plurality of battery cells 100.

With reference to Fig. 2, a plurality of function materials 200 are described.

Each function material 200 includes an elastic particle 210 and a binder 220. The elastic particle 210 is dispersed in the binder 220.

In the embodiment, the elastic particle 210 is a resinous hollow particle. The elastic particle 210 is formed of, for example, an acrylic styrene copolymer. For example, the elastic modulus of the material of the elastic particle 210 is lower than the elastic modulus of the material of the binder 220. The elastic modulus of the material of the elastic particle 210 is, for example, equal to or more than 1 GPa and equal to or less than 20 GPa. In the embodiment, the elastic particle 210 has a hollow substantially spherical shell shape. The particle diameter of the elastic particle 210 is, for example, equal to or more than 75 um and equal to or less than 300 um. The bore diameter of the elastic particle 210 is, for example, equal to or more than 50 um and equal to or less than 200 um. The material and structure of the elastic particle 210 however are not limited to this example. The elastic particles 210 illustrated in Fig. 2 are schematically depicted squeezed in the Y direction by the compression in the Y direction of the battery cells 100 adjacent to each other in the Y direction.

In the embodiment, the binder 220 is formed of a resin. Specifically, the binder 220 is, for example, a cured acrylic resin. The binder 220 may be, for example, an ultraviolet cured acrylic resin. In the example illustrated in Fig. 2, the binder 220 is a resin cured body. The material of the binder 220 however is not limited to this example. The binder 220 adheres to two battery cells 100 located on both sides of the binder 220 in the Y direction. The adhesion strength between the battery cell 100 and the binder 220 is, for example, approximately 10 kPa. The adhesion strength however is not limited to this example.

The thickness of the function material 200 in the Y direction without being compressed by the battery cell 100 in the Y direction is, for example, equal to or more than 0.10 mm and equal to or less than 1.5 mm. The thickness of the function material 200 in the Y direction however is not limited to this example.

The porosity of a portion of the function material 200 not occupied by the elastic particle 210 is, for example, equal to or more than 60 vol% and equal to or less than 70 vol% with respect to a total volume of the function material 200. The porosity equal to or more than the lower limit value thereof allows the function material 200 to be easily compressed in the Y direction. The porosity equal to or less than the upper limit value thereof can improve the strength of the function material 200. The porosity however is not limited to this example. The porosity is measured, for example, by observation of a cross-section perpendicular to the X direction of the function material 200 based on a scanning electron microscope (SEM).

In the embodiment, the function material 200 functions as a fixing material for fixing the battery cell 100 arrayed in the Y direction. The battery module 10 may be applied with force from an outside, for example, by an impact to the battery module 10 or vibration of an automobile on which the battery module 10 is mounted. In the embodiment, even when such force is applied to the battery module 10, shear of each battery cell 100 in the XZ-plane direction can be reduced by the function material 200.

In the embodiment, the function material 200 functions as a fixing material for fixing a plurality of positive electrodes and a plurality of negative electrodes disposed inside each exterior material 102. The function material 200 is compressed in the Y direction by battery cells 100 adjacent to each other in the Y direction. The function material 200 is elastically deformable in the Y direction by the elastic particle 210. Accordingly, each battery cell 100 receives pressurizing force from the function material 200. Thus, shear of a plurality of positive electrodes and a plurality of negative electrodes disposed inside the exterior material 102 in the XZ-plane direction can be reduced by the pressurizing force from the function material 200.

In the embodiment, the function material 200 functions as a buffer material to deform according to the swollenness of the battery cell 100 in the Y direction. The battery cell 100 may be swollen in the Y direction by charging the battery cell 100. As described above, the function material 200 is elastically deformable in the Y direction by the elastic particle 210. Accordingly, when the battery cell 100 is swollen in the Y direction, the function material 200 can be contracted in the Y direction according to the swollenness of the battery cell 100 in the Y direction.

The compression force deflection at 25 °C and 10 % deflection of the function material 200 may be, for example, equal to or more than 3.0 kPa and equal to or less than 10 kPa. For example, in an initial state of the battery module 10 or a discharge state of the battery module 10, a temperature of the function material 200 is approximately 25°C. In this state, the compression force deflection equal to or more than the above-described lower limit value can reduce shear of each battery cell 100 in the XZ-plane direction and shear of a plurality of positive electrodes and a plurality of negative electrodes provided inside each exterior material 102 in the XZ-plane direction. In the above-described state, the compression force deflection equal to or less than the above-described upper limit value can reduce a load on the battery cell 100 and loads on a plurality of positive electrodes and a plurality of provided inside each exterior material 102 due to compression of the function material 200 in the Y direction.

The compression force deflection at 70 °C and 70 % deflection of the function material 200 may be, for example, equal to or more than 0.40 MPa and equal to or less than 0.60 MPa. For example, in a charge state of the battery module 10, a temperature of the function material 200 is approximately 70°C. In this state, the compression force deflection equal to or more than the above-described lower limit value can reduce shear of each battery cell 100 in the XZ-plane direction and shear of a plurality of positive electrodes and a plurality of negative electrodes provided inside each exterior material 102 in the XZ-plane direction. In the above-described state, the compression force deflection equal to or less than the above-described upper limit value can reduce a load on the battery cell 100 and loads on a plurality of positive electrodes and a plurality of disposed inside each exterior material 102 due to compression of the function material 200 in the Y direction.

The above-described compression force deflection is measured according to ASTM D3574.

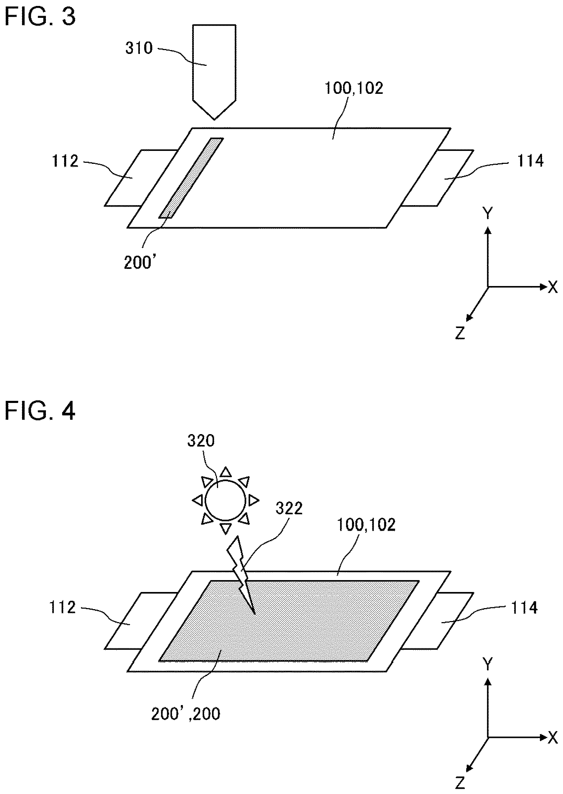

Figs. 3 and 4 are diagrams illustrating a method of manufacturing the battery module 10 according to the embodiment. The battery module 10 according to the embodiment is manufactured as described below. In description using Figs. 3 and 4, unless otherwise specified, the Y direction is substantially parallel to the vertical direction, and the X direction and the Z direction are substantially parallel to the horizontal direction. Unless otherwise specified, the tip end side of the arrow indicating the Y direction is an upper side of the vertical direction, and the base end side of the arrow indicating the Y direction is a lower side of the vertical direction.

First, slurry 200' including the elastic particle 210 and the binder 220 is prepared.

Next, as illustrated in Fig. 3, the slurry 200' is applied onto the upper surface of the exterior material 102. In the example illustrated in Fig. 3, the slurry 200' is dripped from a nozzle 310 located above the exterior material 102. The moving of the nozzle 310 accordingly allows the slurry 200' to be applied onto a desired area of the upper surface of the exterior material 102. For this reason, a formation range of the function material 200 can be easily adjusted as compared with when a compression pad such as a urethane sheet is cut into a predetermined size according to the size of an upper surface of the exterior material 102, and is attached on the upper surface of the exterior material 102. The embodiment does not require peeling off a sheet such as PET film from a compression pad, as compared with a case of using a compression pad such as a urethane sheet. A manufacturing time of the battery module 10 in the embodiment can be accordingly shorter than when using a compression pad. The workability for manufacturing the battery module 10 can be accordingly improved in the embodiment. For example, the slurry 200' is applied onto an area equal to or more than 75 % and equal to or less than 100 % of the upper surface of the exterior material 102.

Next, as illustrated in Fig. 4, the slurry 200' is irradiated with an ultraviolet ray 322. In the example illustrated in Fig. 4, the ultraviolet ray 322 is irradiated from a light source 320 located above the battery cell 100. The binder 220 is cured by the ultraviolet ray 322. The slurry 200' is thus the function material 200. The function material 200 adheres to the upper surface of the exterior material 102.

The method of curing the binder 220 is not limited to light curing illustrated in Fig. 4. For example, the binder 220 may be cured by thermal curing.

Next, another battery cell 100 is stacked on the upper surface side of the battery cell 100 on which the function material 200 is formed. Thus, the upper surface of the function material 200 and the lower surface of the other battery cell 100 are adhere to each other. In this case, for example, the adhesion strength between the lower surface of the function material 200 and the upper surface of the battery cell 100 located below the function material 200, and the adhesion strength between the upper surface of the function material 200 and the lower surface of the other battery cell 100 located above the function material 200 are substantially equal. Next, the function material 200 is formed on the upper surface of the other battery cell 100 similarly to the method described by using Figs. 3 and 4. Thus, a predetermined number of battery cells 100 and function materials 200 are alternately stacked in the Y direction, and a plurality of the battery modules 10 are manufactured.

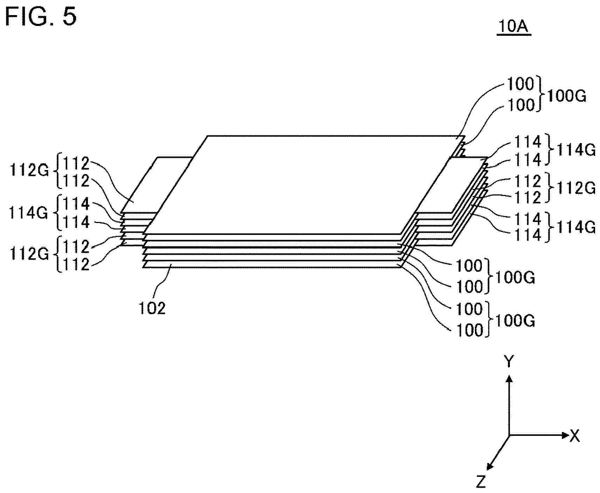

Fig. 5 is a perspective view of a battery module 10A according to a variant. The battery module 10A according to the variant is similar to the battery module 10 according to the embodiment except the following point.

The battery module 10A according to the variant includes a plurality of cell groups 100G. Fig. 5 schematically illustrates three cell groups 100G for description. The number of cell groups 100G included in the battery module 10A however is not limited to the example illustrated in Fig. 5. Each cell group 100G includes two battery cells 100. The number of battery cells 100 included in each cell group 100G however is not limited to two, and may be three or more. Each cell group 100G includes a positive electrode tab group 112G and a negative electrode tab group 114G. The positive electrode tab group 112G includes a plurality of positive electrode tabs 112 drawn from a plurality of battery cells 100 included in each cell group 100G. The negative electrode tab group 114G includes a plurality of negative electrode tabs 114 drawn from a plurality of battery cells 100 included in each cell group 100G.

A plurality of battery cells 100 included in each cell group 100G are connected in parallel. A plurality of cell groups 100G stacked in the Y direction are connected in series in order from a cell group 100G on one side in the Y direction to a cell group 100G on the other side in the Y direction. Specifically, the positive electrode tab group 112G and the negative electrode tab group 114G drawn from one of two cell groups 100G adjacent to each other in the Y direction, and the positive electrode tab group 112G and the negative electrode tab group 114G drawn from the other one of the two cell groups 100G adjacent to each other in the Y direction are directed oppositely to each other in the X direction. On one side in the X direction of two cell groups 100G adjacent to each other in the Y direction, the positive electrode tab group 112G drawn from one cell group 100G and the negative electrode tab group 114G drawn from the other cell group 100G are joined to each other, for example, by laser welding. For example, the positive electrode tab group 112G drawn from the uppermost cell group 100G in Fig. 5 to the left side in Fig. 5, and the negative electrode tab group 114G drawn from the second cell group 100G from top in Fig. 5 to the left side in Fig. 5 are joined to each other. The positive electrode tab group 112G drawn from the second cell group 100G from top in Fig. 5 to the right side in Fig. 5, and the negative electrode tab group 114G drawn from the third cell group 100G from top in Fig. 5 to the right side in Fig. 5 are joined to each other. Thus, a joint portion between the positive electrode tab group 112G and the negative electrode tab group 114G on the left side in Fig. 5 and a joint portion between the positive electrode tab group 112G and the negative electrode tab group 114G on the right side in Fig. 5 are alternately disposed in a plurality of cell groups 100G.

Also in the variant illustrated in Fig. 5, similarly to the embodiment, the function material 200 may be provided between adjacent battery cells 100 in the Y direction. The workability for manufacturing the battery module 10A can be accordingly improved also in the variant, similarly to the embodiment.

While the embodiment and the variant according to the present invention have been described with reference to the drawings, the embodiment and the variant are illustrative of the present invention, and various configurations other than the above-described configurations may be employed.

### REFERENCE SIGNS LIST

- 10, 10A: Battery module

- 100: Battery cell
- 100G: Cell group
- 102: Exterior material
- 112: Positive electrode tab
- 112G: Positive electrode tab group
- 114: Negative electrode tab
- 114G: Negative electrode tab group
- 200: Function material
- 210: Elastic particle
- 220: Binder
- 310: Nozzle
- 320: Light source
- 322: Ultraviolet ray

## Claims

1. A battery module comprising:
a plurality of battery cells; and
a function material located between the adjacent battery cells, wherein
the function material includes an elastic particle, and a binder in which the elastic particle is dispersed.

2. The battery cell according to claim 1, wherein
a compression force deflection at 25 °C and 10 % deflection of the function material is equal to or more than 3.0 kPa and equal to or less than 10 kPa, and
the compression force deflection at 70 °C and 70 % deflection of the function material is equal to or more than 0.40 MPa and equal to or less than 0.60 MPa.

3. The battery module according to claim 1 or 2, wherein
the elastic particle is a resinous hollow particle.

4. The battery module according to any one of claims 1 to 3, wherein
the binder is an acrylic resin.

5. A method of manufacturing a battery module, comprising:
a step of applying slurry onto a battery cell, the slurry including an elastic particle and a binder; and
a step of curing the binder.

6. The method of manufacturing a battery module according to claim 5, wherein,
after the step of curing the binder, a compression force deflection at 25 °C and 10 % deflection of a function material including the elastic particle and the binder is equal to or more than 3.0 kPa and equal to or less than 10 kPa, and,
after the step of curing the binder, the compression force deflection at 70 °C and 70 % deflection of the function material is equal to or more than 0.40 MPa and equal to or less than 0.60 MPa.

7. The method of manufacturing a battery module according to claim 5 or 6, wherein
the elastic particle is a resinous hollow particle.

8. The method of manufacturing a battery module according to any one of claims 5 to 7, wherein
the binder is an acrylic resin.

9. The method of manufacturing a battery module according to any one of claims 5 to 8, wherein,
in the step of curing the binder, the binder is cured by irradiating the binder with light.
